# EUROPÄISCHE PATENTSCHRIFT

(11) **EP 2 524 574 B1**
(45) Veröffentlichungstag und Bekanntmachung des Hinweises auf die Patenterteilung: **21.09.2016**
(21) Anmeldenummer: 11700263.4
(22) Anmeldetag: 12.01.2011
(51) Int. Cl.: H05B 37/02, H05B 41/392

(54) **SYNCHRONISIERTE ANSTEUERUNG VON LAMPEN**
SYNCHRONIZED CONTROL OF LAMPS
COMMANDE DE LAMPES SYNCHRONISÉE

(30) Priorität: 15.01.2010 DE 102010000935; 12.01.2010 DE 102010000806
(43) Veröffentlichungstag der Anmeldung: 21.11.2012
(73) Patentinhaber: Tridonic GmbH & Co KG, 6851 Dornbirn (AT)
(72) Erfinder: BISCHOF, Gerold, 6820 Frastanz (AT); FENKART, Karlheiz, 6845 Hohenems (AT)
(74) Vertreter: Rupp, Christian
(86) Internationale Anmeldenummer: PCT/EP2011/050330
(87) Internationale Veröffentlichungsnummer: WO 2011/086090

(56) Entgegenhaltungen:
- US-A- 4 521 843
- US-A- 5 586 048
- US-A1- 2008 061 633

## Beschreibung

Die vorliegende Erfindung behandelt ein Verfahren zur Ansteuerung von Lampen und ein entsprechend ausgelegtes Beleuchtungssystem, bei dem bzw. der Ansteuerbefehle synchron in allen Leuchtmitteln auf miteinander synchronisierte Weise umgesetzt werden.

Moderne Beleuchtungssysteme verfügen über eine Vielzahl von Lampen, die zentral und einheitlich geregelt werden können. Hierfür weist ein entsprechendes Beleuchtungssystem eine Schnittstelle, vorzugsweise eine manuelle Nutzerschnittstelle auf, über die ein Nutzer ein Signal erzeugen kann, das eine Betriebsmodusänderung der Beleuchtung bewirkt. Bei der Nutzerschnittstelle kann es sich im einfachsten Fall um einen Ein/Aus- Schalter handeln, oder auch um einen Dimmschalter, der mit externer Spannung, wie bspw. Netzspannung, versorgt wird. Entsprechend kann das Signal ein Ein- bzw. Ausschalten der Lampen hervorrufen oder aber ein dimmen der Lampen. Zur Übertragung von Ansteuerbefehlen weist das Beleuchtungssystem vorzugsweise einen Bus auf, insbesondere einen Bus, der die Ansteuerbefehle als digitale Signale überträgt. Die Lampen ihrerseits werden von einem oder mehreren Betriebsgeräten, insbesondere von elektronischen Vorschaltgeräten betrieben, betrieben, wobei die Betriebsgeräte die eingehenden Ansteuerbefehle entsprechend umsetzen können. Bei den Ansteuerbefehlen kann es sich um Befehle handeln, die ein impulsartiges Signal aufweisen, wie bspw. beim Ein- bzw. Ausschalten oder um Signale die über ein längeres Zeitintervall andauern, wie bspw. ein Dimmbefehl mittels eines DrehDimmschalters oder aber eines Dimmtasters.

Zur Beleuchtung werden heutzutage in erster Linie Gasentladungslampen oder LEDs aufgrund ihrer hohen Effizienz eingesetzt. Bei beiden Leuchmitteln ist es üblich, ein entsprechend dafür ausgelegtes Betriebsgerät einzusetzen, wobei an ein Betriebsgerät mindestens eines des jeweiligen Leuchtmittels angeschlossen sein kann.

Bei einem manuellen Auf- oder Abdimmen ausgehend von einer netzspannungsgeführten Nutzerschnittstelle kann sich nun das Problem ergeben, dass aufgrund der Verwendung von mehreren Betriebsgeräten, die jeweils angeschlossenen Leuchtmittel mit unterschiedlichem Startzeitpunkt auf den Dimmbefehl reagieren. Dies kann bspw. dadurch verursacht werden, dass es bspw. bei der internen Verarbeitung von empfangenen Befehlen aufgrund von Verzugszeiten und durch den unterschiedliche Takt der einzelnen Steuerschaltungen über einen längeren Zeitraum gesehen zu Abweichungen kommen kann. Auch kann es durch Mischung von Lampen und Wattagen dazu kommen, dass unterschiedliche Be3triebsgeräte (mit ggf. unterschiedlichen Reglern und /oder Schnittstellen) gemischt werden.

Wenn dann die Betätigung der manuellen Nutzerschnittstelle zu einem bestimmten Zeitpunkt beendet wird, kann somit das Problem auftreten, dass die unterschiedlichen Betriebsgeräte bzw. deren Leuchtmittel zu diesem Zeitpunkt einen unterschiedlichen nicht synchronisierten Lichtstrom erzeugen. Bei Gasentladungslampen kann insbesondere ein unterschiedlicher Zündzeitpunkt von an unterschiedlichen Betriebsgeräten angeschlossenen Lampen zu einem solchen asynchronen Dimmverhalten führen. Der unterschiedliche Zündzeitpunkt tritt bspw. auf, wenn in einem System Lampen unterschiedlichen Alterungsgrads betrieben werden (durch zunehmende Abnutzung der Elektroden stehen zunehmend weniger Ladungsträger zur Verfügung, so dass die Lampen immer weniger zündwillig sind).

Beim Abwärtsdimmen kann dieses Problem dahingehend noch verstärkt auftreten, dass manche der angesteuerten Betriebsgeräte bereits ihre Abschaltschwelle, bspw. 3% Dimmpegel, erreicht haben, während andere diese Schwelle noch nicht erreicht haben und dementsprechend gedimmt eingeschaltet verbleiben. Somit kommt ein asynchrones Dimmverhalten ganz besonders zum Vorschein.

Die gleiche Problematik taucht auch bei einfachen Dimmprotokollen, bspw. beim Dimmen mittels eines Dimmtasters, bei dem die Dauer der Betätigung des Tasters ausgewertet wird, zum Vorschein.

Weiterhin besteht das Problem, dass ein Beleuchtungssystem unterschiedlich leistungsfähige Betriebsgeräte, insbesondere EVGs aufweisen kann und auch Gasentladungslampen mit unterschiedlichen Vorheizungen aufweisen kann, so dass bei einem Einschalten die Vorheizzeit und damit die Dauer bis jedes Leuchtmittel leuchtet unterschiedlich ausfallen kann.

Wenn als Leuchtstoffmittel LEDs eingesetzt werden, so werden diese üblicherweise mittels des Einsatzes einer Pulsweitenmodulation (PWM) angesteuert. So ist durch Einstellen des Tastverhältnisses ein Dimmen der LEDs möglich. Hierbei stellt sich jedoch das Problem, dass bei sehr geringen Dimmpegeln die LEDs für eine relativ lange Zeit pro PWM-Periode ausgeschaltet sind. Dies kann sich insbesondere durch einen unerwünschten Stroboskop- oder Beadeffekt bemerkbar machen. Das Dokument US 5 586 048 offenbart einen intelligenten Schalter Zur Antivierung von Leuchtmitteln.

Aufgabe der vorliegenden Erfindung ist es, ein Verfahren, ein dafür ausgelegtes Betriebsgerät und ein dafür ausgelegtes Beleuchtungssystem bereitzustellen, bei dem die Synchronisierung von Betriebsmodusänderungen von Leuchtmitteln zumindest ansatzweise verbessert wird.

Diese Aufgabe wird durch die Merkmale der unabhängigen Ansprüche gelöst. Die abhängigen Ansprüche stellen vorteilhaft Weiterbildungen der Erfindung dar.

Bei der Erfindung werden die oben beschriebenen Probleme dadurch gelöst, dass die Umsetzung der Ansteuerbefehle in den einzelnen Betriebsgeräten auf eine miteinander synchronisierte Weise umgesetzt wird. Für eine solche Synchronisierung wird in den einzelnen Betriebsgeräten eine gemeinsame Zeitbasis verwendet. Dank der Erfindung ist hierfür jedoch kein separater Kommunikationsbus notwendig, wobei dieser aber zusätzlich eingesetzt werden kann.

Die Erfindung behandelt also ein Verfahren zur Ansteuerung von Leuchtmitteln nach Anspruch 1. Bei diesem nimmt ein Betriebsgerät für Leuchtmittel eine Betriebsmodusänderung, wie bspw. Zünden oder Dimmen, als Antwort auf ein von Aussen an einer Schnittstelle des Betriebsgeräts eingehendes vorzugsweise nichtdigitales Signal vor.

Ein derartiges nichtdigitales Signal kann bspw. durch einen mit Spannung (Netzspannung oder Spannung von der Schnittstelle des Betriebsgeräts) versorgten Schalter oder Taster erzeugt werden, der bspw. manuell bedient wird.

Eine weitere Alternative sind Dimmer, die ein Signal bspw. durch manuelles Drehen und/oder Mehrfachbetätigung erzeugen.

Das Signal ist vorzugsweise ein Netzspannungs-geführtes Signal.

Das Betriebsgerät nimmt die Auslösung der Betriebsmodusänderung synchron mit direkt oder mit indirekt erfassten signifikanten Punkten des Verlaufs der Netzversorgungsspannung, wie bspw. Nulldurchgängen einer Netzversorgungsspannung als Zeitbasis vor. "Nulldurchgang" steht dabei im Rahmen der vorliegenden Erfindung lediglich als Beispiel für ein Überschreiten oder Unterschreiten eine vorgegeben Schwellenwerts. Auch Minima oder Maxima können signifikante Punkte darstellen.

Der Ansteuervorgang der Betriebsmodusänderung im Betriebsgerät kann dabei nach Ablauf einer individuell vorbestimmten Zeitspanne umgesetzt werden.

Als Zeitbasis wird vorzugsweise ein aus der Netzversorgungsspannung gebildetes Rechteck-Taktungssignal verwendet.

Außerdem kann die vorbestimmte Zeitspanne die Zeitdauer vom Zeitpunkt des Empfangs des Ansteuerbefehls Signals im Betriebsgerät bis zu einem zweiten Zeitpunkt darstellen. An dem zweiten Zeitpunkt durchläuft die Netzversorgungsspannung oder das Rechteck-Taktungssignal vorzugsweise einen vorbestimmten zukünftigen Nulldurchgang.

Das von Aussen eingehende Signal kann durch die manuelle Betätigung einer Benutzerschnittstelle hervorgerufen werden, bzw. diese Betätigung darstellen.

Die Benutzerschnittstelle kann dabei ein mit externer Spannung, wie bspw. AC-Spannung,m insbesondere Netzspannung, oder mit Spannung des Betriebsgeräts versorgter Schalter oder Taster sein.

Denkbar ist jedoch auch, dass das von Aussen eingehende Signal ein analogerAnsteuerbefehl ist.

Das Betriebsgerät wertet vorzugsweise eine zeitliche Dauer des von Aussen eingehenden Signals aus.

Das Signal kann einerseits impulsartig sein, und der entsprechende Ansteuervorgang impulsartig ausgelöst werden.

Andererseits kann das Signal, beispielsweise ein Dimmbefehl, auch ein über ein bestimmtes Zeitintervall andauerndes Signal darstellen und der entsprechende Ansteuervorgang über eine Dauer hinweg umgesetzt werden, die durch das bestimmte Zeitintervall vorgegeben wird.

Weiterhin bezieht sich die Erfindung auch auf ein Verfahren zur Ansteuerung von Leuchtmitteln. Bei diesem Verfahren nehmen mehrere Betriebsgeräte für Leuchtmittel eine Betriebsmodusänderung, wie bspw. Zünden oder Dimmen, als Antwort auf ein von Aussen an einer Schnittstelle eines jeden Betriebsgeräts eingehendes Signal eines Ansteuerbefehls vor. Die Auslösung der Betriebsmodusänderung erfolgt dabei durch die Betriebsgeräte synchron. Es werden dafür direkt oder indirekt erfasste Nulldurchgänge einer Netzversorgungsspannung als Zeitbasis verwendet.

Der Ansteuervorgang der Betriebsmodusänderung wird vorzugsweise im Betriebsgerät nach Ablauf einer individuell vorbestimmten Zeitspanne umgesetzt.

Die Leuchtmittel können in einem ersten Aspekt der Erfindung Gasentladungslampen sein und das Signal ein Einschaltbefehl der Gasentladungslampen. Dabei wird die Lampenvorheizzeit bis zur tatsächlichen Lampenzündung einer jeden Gasentladungslampe vorzugsweise bestimmt, und die vorbestimmte Zeitspanne so eingestellt, dass Diskrepanzen in der Lampenvorheizzeit der einzelnen Gasentladungslampen kompensiert werden.

In einem zweiten Aspekt der Erfindung können die Leuchtmittel LEDs sein und mit einem PWM-Signal angesteuert werden. Die vorbestimmte Zeitspanne für einen Teil der Betriebsgeräte so festgelegt wird, dass sich die durch die einzelnen Betriebsgeräte erzeugten PWM-Pakete zeitlich so überlappen, dass die Zeitdauer, in der keine LED leuchtet, möglichst klein wird.

Darüber hinaus behandelt die Erfindung eine Steuereinheit für ein Betriebsgerät, insbesondere integrierte Schaltung wie bspw. ein ASIC, ein Mikrokontroller oder eine Hybridversion davon. Die Steuereinheit ist dabei zur Durchführung des oben beschriebenen Verfahrens ausgebildet.

Die Erfindung bezieht sich auch auf ein Betriebsgerät für Leuchtmittel, insbesondere Gasentladungslampen, LEDs oder OLEDs. Das Betriebsgerät weist dabei eine Steuereinheit auf, wie oben beschrieben.

Das Betriebsgerät kann eine Einheit zu Nulldurchgangserkennung der eingangs anliegenden Netzwechselspannung aufweisen. Auch denkbar ist, dass sie eine Lampenzündungs-Erkennungseinheit aufweist.

Schließlich behandelt die Erfindung auch ein Beleuchtungssystem, das wenigstens zwei mit derselben Netzspannung versorgte Betriebsgeräte aufweist, wie oben beschrieben.

Das Beleuchtungssystem kann auch einen Steuerbus aufweisen, vorzugsweise einen Digital-Serial-Interface-Bus.

Vorzugsweise ist der Steuerbus für einen DALI-Standard ausgelegt.

Weitere Vorteile, Eigenschaften und Merkmale der Erfindung sollen nunmehr bezugnehmend auf die Figuren der begleitenden Zeichnungen erläutert werden.

Es zeigen:
- Figur 1: ein erstes Ausführungsbeispiel des erfindungsgemäßen Verfahrens,
- Figur 2: ein zweites Ausführungsbeispiel des erfindungsgemäßen Verfahrens,
- Figur 3: ein drittes Ausführungsbeispiel des Verfahrens, und
- Figur 4: ein erfindungsgemäßes Beleuchtungssystem mit zwei Betriebsgeräten.

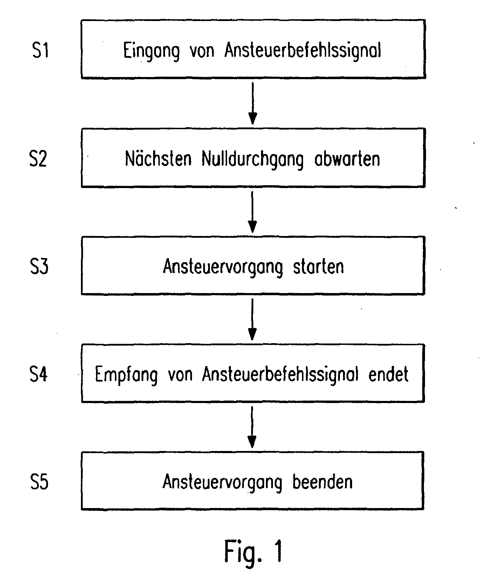

Bei den Ausführungsbeispielen aus den Figuren 1 - 3 handelt es sich um Verfahren, die in einem Betriebsgerät zum Betreiben mindestens eines Leuchtmittels durchgeführt werden. Das Betriebsgerät ist dabei an ein Beleuchtungssystem mit mehreren Betriebsgeräten angeschlossen. Dank des erfindungsgemäßen Verfahrens ist es möglich, dass die einzelnen Betriebsgeräte sich unabhängig voneinander regeln, also keine zentrale Steuereinheit zur Synchronisierung notwendig ist. Als Verbindung zwischen den einzelnen, individuell geregelten Betriebsgeräten ist lediglich eine Schnittstelle notwendig, die entweder über die Versorgungsspannung realisiert sein kann, oder über eine externen Steuerbus.

Figur 1 zeigt ein erstes Ausführungsbeispiel des erfindungsgemäßen Verfahrens. Bei diesem Ausführungsbeispiel wird erreicht, dass Leuchtmittel, die an unterschiedliche Betriebsgeräte angeschlossen sind, jedoch zu demselben Beleuchtungssystem gehören, auch zeitlich einheitlich, d.h. synchron gedimmt werden. Figur 1 zeigt dabei den möglichen Ablauf, wie er in einem einzelnen Betriebsgerät durchgeführt werden kann, das an ein Beleuchtungssystem mit mehreren Betriebsgeräten angeschlossen ist.

In Schritt S1 empfängt das Betriebsgerät also ein vorzugsweise analoges und netzspannungsgeführtes Signal, das dazu ausgelegt ist, eine Betriebsmodusänderung der Beleuchtung hervor zu rufen, und ein Ansteuerbefehl sein kann. Dabei handelt es sich vorzugsweise um ein elektrisches Signal, das analog oder digital ist. Möglich ist jedoch auch, dass es sich bei dem Signal, bzw. dem darin zumindest implizit enthaltenem Ansteuerungbefehl um eine Veränderung der Versorgungsspannung des Betriebsgeräts handelt. Ausgehend von dem Umstand, dass es sich um einen Dimmbefehl dabei handelt, ist zu folgern, dass das korrespondierende elektrische Signal nicht impulsförmig, d.h. diskret- oder diraqförmig ist, sondern sich das Signal über einen längeren Zeitraum erstreckt. Dies resultiert daraus, dass ein Nutzer einen Drehdimmschalter über eine gewisse Zeit hinweg dreht, bis die Beleuchtung seiner Meinung nach den gewünschten Dimmpegel erreicht hat. Hierbei ist es wichtig, dass der Dimmvorgang, also die entsprechende Betriebsmodusänderung, möglichst in Echtzeit umgesetzt wird. Im Betriebsgerät wird also nun beispielsweise mittels eines elektronischen Zählers ermittelt, in welchem Umfang gedimmt wird. Beim Einsatz eines Drehdimmschalters kann hierfür beispielsweise die Anzahl der Umdrehungen gemessen werden. Bei Einsatz eines Dimmtasters kann bei Schritt S1 ein Zähler gestartet werden, der solange zählt, wie der Dimmtaster gedrückt gehalten wird. Von diesem Fall soll in diesem Ausführungsbeispiel einmal ausgegangen werden. Beim Zählen ist es auch möglich, als Zeitbasis die Anzahl der Nulldurchgänge zu messen, solange der Dimmtaster gedrückt wird, d.h. solange das Betriebsgerät das Signal empfängt. Bei den Nulldurchgängen handelt es sich um die Nulldurchgänge der Versorgungs-Wechselspannung des Betriebsgeräts.

"Nulldurchgang" steht dabei lediglich als Beispiel für ein Überschreiten oder Unterschreiten eine vorgegeben Schwellenwerts. Neben dem Bestimmen des Nulldurchgangs oder des Maximums oder Minimums der Netzspannung kann auch ein bestimmter Spannungswert als Referenzwert anstelle des Nulldurchgangs verwendet werden.

In Schritt S2 wird nun erfindungsgemäß bis zum Auslösen, d.h. bis zum Beginn des Umsetzens des Ansteuerbefehls eine vorbestimmte Zeitspanne abgewartet. In diesem Ausführungsbeispiel handelt es sich bei der vorbestimmten Zeitspanne um die Zeit die verstreicht, bis der nächste Nulldurchgang der Versorgungswechselspannung erreicht ist. Die vorbestimmte Zeitspanne entspricht in diesem Ausführungsbeispiel also der Zeit zwischen dem Anfang des Empfangens des Ansteuerbefehlssignals im Betriebsgerät bis zu dem darauffolgenden Nulldurchgang der Versorgungsspannung. Somit kann sichergestellt werden, dass trotz zu unterschiedlichen Zeitpunkten eintreffenden Ansteuerbefehlssignalen in den einzelnen Betriebsgeräten der Dimmvorgang in allen Betriebsgeräten gleichzeitig umgesetzt wird. Natürlich ist es möglich, die vorbestimmte Zeitspanne anders, insbesondere länger festzulegen. Es können also beispielsweise mehr als nur ein folgender Nulldurchgang abgewartet werden. Der unterschiedliche Zeitpunkt des Eingangs des Ansteuerbefehlssignals in den einzelnen Betriebsgeräten kann aus unterschiedlichen Zündzeitpunkten der angeschlossenen Lampen resultieren. Auch kann er aus unterschiedlichen Signalübertragungszeiten resultieren. Bei der vorbestimmten Zeitspanne versteht sich also, dass diese für jedes Betriebsgerät individuell ausfallen kann.

In Schritt S3 wird also nun nach Ablauf der vorbestimmten Zeitspanne der Ansteuervorgang, durch den eine Betriebsmodusänderung der Beleuchtung bewirkt wird, in dem Betriebsgerät entsprechend dem Ansteuerbefehlssignal ausgelöst, also gestartet.

Im Schritt S4 wird nun angenommen, dass der Eingang des Ansteuerbefehlssignals endet. Dies resultiert daraus, dass der Nutzer aufgehört hat, den Dimmtaster gedrückt zu halten. Dementsprechend kann auch der Zähler, der den Umfang des Dimmvorgangs misst, gestoppt werden.

In Schritt S5 wird daraufhin auch der Ansteuervorgang im Betriebsgerät beendet. Dabei ist es möglich, dass Schritt S5 unmittelbar, d.h. gleichzeitig mit Schritt S4 durchgeführt wird. Dies hat den Vorteil, dass die Beleuchtung aus Sicht des Nutzers in Echtzeit gedimmt wird. Der Dimmvorgang wird nämlich unmittelbar beendet, sobald der Nutzer aufhört, die Dimmtaste gedrückt zu halten.

Möglich ist jedoch auch, dass die Beendung des Ansteuervorgangs im Betriebsgerät wieder mittels der gemeinsamen Zeitbasis, d.h. mittels der Nulldurchgänge der Versorgungsspannung, synchronisiert wird. Dies hat den Zweck, dass der Dimmvorgang in allen Lampen exakt zum selben Zeitpunkt beendet wird, und somit, nachdem ebenfalls der Dimmvorgang in allen Lampen zum selben Zeitpunkt begonnen worden ist, alle Lampen auf demselben Dimmpegel eingestellt sind. Hierfür ist es also denkbar, dass der durch den Zähler ermittelte Dimmwert exakt durch den Ansteuervorgang umgesetzt wird. Dies bedeutet, dass zwischen dem Schritt S5 und dem Schritt S4 ein Zeitintervall auftritt, das der vorbestimmten Zeitspanne entsprechen kann. Möglich ist hierbei jedoch auch, dass anstelle der Referenz der Zählerwerts oder zusätzlich dazu zu dem Zeitpunkt des Endes des Eingangs des Ansteuerbefehlssignals der Ansteuervorgang noch solang fortgesetzt wird, bis die vorbestimmt Zeitspanne durchlaufen ist, d.h. bis beispielsweise der nächste Nulldurchgang der Versorgungsspannung erreicht worden ist.

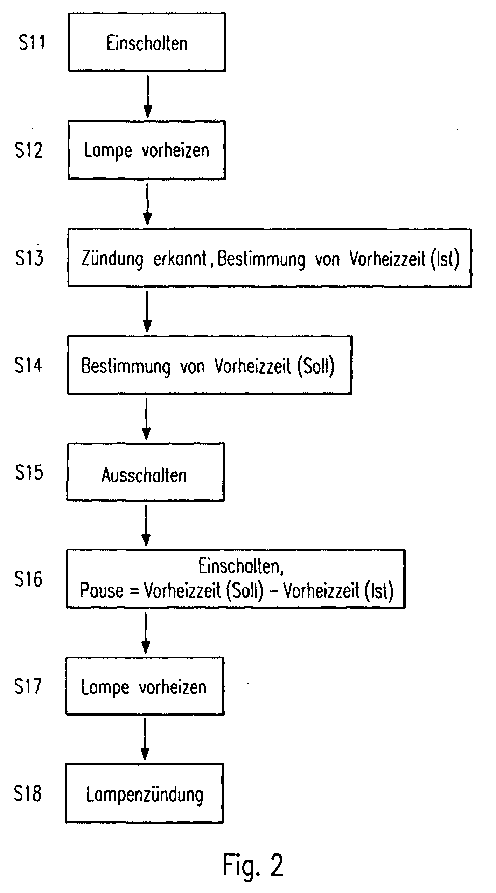

Figur 2 zeigt ein zweites Ausführungsbeispiel des erfindungsgemäßen Verfahrens. Dieses bezieht sich einzig auf den Einsatz von Gasentladungslampen als Leuchtmittel. In Schritt S11 wird die Beleuchtung eingeschaltet. Dies bedeutet dass ein Einschaltbefehl an alle Betriebsgeräte des Beleuchtungssystems übertragen wird und diese dann dementsprechend die jeweils angeschlossenen Gasentladungslampen vorheizen und zünden. Dabei kann nun das Problem auftreten, dass aufgrund von unterschiedlichen Betriebsgeräten, insbesondere wenn ältere durch neuere ersetzt worden sind, und durch den Einsatz von unterschiedlichen Gasentladungslampen, insbesondere bei Austausch von älteren durch neure, die Lampenzündzeit unterschiedlich ausfallen kann. Dies resultiert aus unterschiedlichen Vorheizzeiten und soll durch das gezeigte erfindungsgemäße Verfahren verhindert werden.

Hierfür wird in Schritt S12, der beim erstmaligen Einschalten des Beleuchtungssystems oder nach einem Beleuchtungssystems-Reset ausgeführt wird und der gleichzeitig mit Schritt S11 erfolgt, ein Zähler gestartet, den jedes einzelne Betriebsgerät aufweist. Dieser Zähler hat den Zweck, die Vorheizzeit der Lampen der einzelnen Betriebsgeräte zu messen. Zum Zählen kann der Zähler auch als Referenz die gemeinsame Zeitbasis, d.h. die Nulldurchgänge der Versorgungsspannung verwenden, d.h. er kann die Anzahl der Nulldurchgänge messen.

In Schritt S13 wird nun im Betriebsgerät die Lampenzündung erkannt. Damit wird der Zähler gestoppt. Somit kann eine Ist-Vorheizzeit bestimmt werden. In Schritt S14 wird diese ermittelte Vorheizzeit, d.h. der Istwert, an eine zentrale Steuereinheit gesendet.

Die zentrale Steuereinheit kann somit durch Vergleich die längste Vorheizzeit aller Betriebsgeräte bestimmen. Ein Sollwert der Vorheizzeit wird somit gleich dieser ermittelten längsten Vorheizzeit gesetzt. Der entsprechende Sollwert der Vorheizzeit wird daraufhin an die einzelnen Betriebsgeräte zurückgesendet. In Schritt S15 wird nun zu einem beliebigen Zeitpunkt, vorzugsweise durch den Nutzer, das Beleuchtungssystem wieder ausgeschaltet.

Beim nächstmaligen Anschalten des Beleuchtungssystems in Schritt S16 beginnt nun ein angeschlossenes Betriebsgerät nicht sofort mit der Lampenvorheizung. Stattdessen wartet es eine vorbestimmte Zeitspanne ab, bis es den eingegangenen Befehl umsetzt. Die vorbestimmte Zeitspanne entspricht in diesem Beispiel der Differenz zwischen dem von der zentralen Steuereinheit ermittelten Sollwert der Vorheizzeit und dem durch das Betriebsgerät selbst ermittelten Istwert der Vorheizzeit.

Nach Ablauf der vorbestimmten Zeitspanne beginnt nun in Schritt S17 das Betriebsgerät mit der Lampenvorheizung.

Somit werden in Schritt S18 alle Lampen des Beleuchtungssystems zum selben Zeitpunkt gezündet. Es werden also alle Lampen nach Verstreichen des Sollwerts der Vorheizzeit gezündet.

Möglich ist jedoch auch eine Ausführungsform, in der keine zentrale Steuereinheit eingesetzt wird. Möglich ist nämlich, den Sollwert der Vorheizzeit als einen festgelegten Wert zu bestimmen, der in jedem einzelnen Betriebsgerät gespeichert ist. Somit kann Schritt S14 ausgelassen werden. Alle anderen Schritte können jedoch in derselben beschriebenen Weise durchgeführt werden.

Es liegt also eine adaptive Vorheizzeit vor, um das für Gasentladungslampen spezifische Problem ggf. unterschiedlicher Vorheiz- und/oder Zündverhalten dieser Art von Leuchtmittel zumindest zu verringern. Diese Problem besteht typischerweise bei anderen Leuchtmitteln, insbesondere LEDs, nicht.

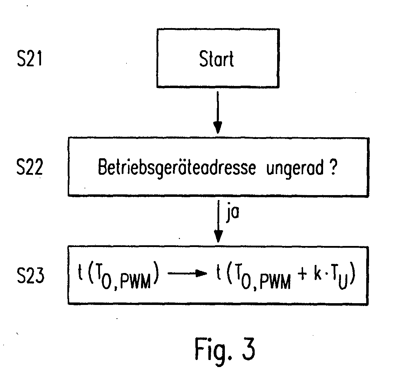

Figur 3 zeigt ein drittes Ausführungsbeispiel des erfindungsgemäßen Verfahrens. Dieses behandelt insbesondere den Fall, dass nicht nachleuchtende Leuchtmittel eingesetzt werden und diese mit einem Pulsweitenmodulationsverfahren (PWM) betrieben werden. Bei den eingesetzten Leuchtmitteln kann es sich insbesondere um LEDs handeln.

In Schritt S21 wird die Beleuchtung eingeschaltet. Dabei handelt es sich vorzugsweise erneut um ein Beleuchtungssystem aufweisend mehrere Betriebsgeräte die jeweils wieder ein oder mehrere Leuchtmittel betreiben.

In Schritt S22 bestimmt jedes Betriebsgerät, ob es eine ungerade Adresse aufweist. Bei der Adresse kann es sich beispielsweise um eine DALI-Adresse handeln. Es kann sich jedoch auch um eine festgeschriebene Seriennummer handeln. Ob die Adresse nun gerade oder ungerade ist, kann auf verschiedenste bekannte Methoden ermittelt werden. Einzig entscheidend ist, dass so zwei in etwa gleich große Gruppierungen entstehen, eine Gruppierung von Betriebsgeräten mit geraden Adressen und eine Gruppierung von Geräten mit ungeraden Adressen. Möglich ist dabei aber auch, dass mittels anderer arithmetischer Berechnungen anhand der Adressen mehr als lediglich zwei Gruppierungen gebildet werden. Die Betriebsgeräte mit geraden Adressen werden in diesem Beispiel normal betrieben.

In Schritt S23 wird nun in jedem Betriebsgerät mit einer ungeraden Adresse eine Phasenverschiebung der PWM-Periode durchgeführt. Hierfür wird der Zeitpunkt des Periodenbeginns T_{PWM, 0} durch die vorbestimmte Zeitspannung k x T_{U} Phasen verschoben. D.h. verzögert. Bei T_{U} handelt es sich dabei um die Periodendauer der Versorgungsspannung oder um die Zeit zwischen zwei Nulldurchgängen von der Versorgungsspannung. k ist ein Faktor, der so eingestellt ist, dass das PWM-Signal möglichst um eine halbe PWM-Periode phasenverschoben wird. Somit kann erreicht werden, dass in etwa die Hälfte aller Leuchtmittel um eine halbe PWM-Periode phasenverschoben mit demselben PWM-Signal betrieben wird. Daraus resultiert, dass beispielsweise bei einem Dimmpegel von 50%, d.h. bei einem PWM-Tastverhältnis von 50% immer ein Teil der Leuchtmittel leuchtet, während die anderen ausgeschaltet sind. Somit wird eine durchgehende, oder bei niedrigerem Dimmpegel zumindest möglichst durchgängige Beleuchtung erreicht. Es kann also sichergestellt werden, dass ein unerwünschter Stroboskopeffekt und ein unerwünschter sog. Beadeffekt, also eine Art Stroboskopeffekt bei sich relativ zu einer Lichtquelle bewegenden Objekten, zumindest verringgert werden kann.

Es ist jedoch auch denkbar, dass die in Schritt S23 gezeigte Phasenverschiebung erst dann umgesetzt wird, wenn zuvor von dem Betriebsgerät mit ungerader Adresse ein Ansteuerbefehl empfangen wird, der einen Dimmpegel vorgibt, der unter einem kritischen Bereich liegt, beispielsweise unterhalb von 50%. Daraufhin kann dann in Schritt S23 im entsprechenden Betriebsgerät aufgezeigte Weise die vorbestimmte Zeitspanne abgewartet werden, die eine halbe PWM-Periode ist, und daraufhin erst der dem Ansteuerbefehl entsprechende Ansteuervorgang umgesetzt werden, d.h. das PWM-Tastverhältnis entsprechend eingestellt werden.

Wenn in Schritt S22 mehr als zwei Gruppen gebildet werden, so können auch in Schritt S23 die entsprechenden Gruppen individuelle Werte für k aufweisen, also mehr als 2, d.h. "Null" und "ungleich Null", so dass zwischen den einzelnen Gruppierungen unterschiedliche PWM-Phasenverschiebungen, möglichst gleich verteilte, auftreten.

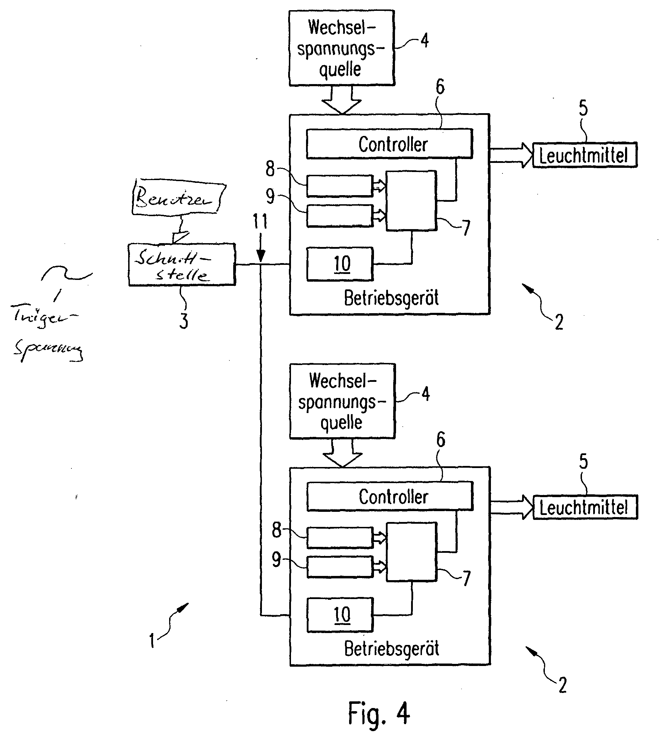

Figur 4 zeigt schließlich ein Ausführungsbeispiel eines erfindungsgemäßen Beleuchtungssystems 1 bzw. eines Beleuchtungssystems 1. Das Beleuchtungssystem 1 weist in diesem Beispiel zwei Betriebsgeräte 2 auf. Jedes der Betriebsgeräte 2 betreibt dabei ein Leuchtmittel 5. Dabei handelt es sich vorzugsweise um eine LED- oder eine Gasentladungslampe. Selbstverständlich kann das Betriebsgerät auch mehrere Leuchtmittel betreiben. Auch denkbar ist, dass es sich bei dem Leuchtmittel 5 um ein LED-Modul handelt, das rote, grüne und blaue LEDs aufweist oder farbstoffkonvertierte weiße LEDs. Bei letzterer Möglichkeit handelt es sich vorzugsweise um blaue LEDs, deren Licht mit einem Phosphor teilweise in gelbes Licht konvertiert wird, wobei zusätzlich für ein insgesamt wärmeres Licht noch eine oder mehrere rote LEDs hinzugefügt sein können.

Die Betriebsgeräte 2 werden jeweils von einer Wechselspannungsquelle 4 auf übliche Art mit elektrischem Strom versorgt. Das Betriebsgerät 2 ist dabei so ausgelegt, dass es den elektrischen Strom der Versorgungsspannung 4 entsprechend den Betriebsbedingungen der Leuchtmittel 5 und der durch die Nutzerschnittstelle 3 resultierenden Ansteuerbefehle anpasst. Hierfür weist das Betriebsberät 2 insbesondere einen Gleichrichter, einen DC/DC-Wandler und eventuell noch einen nachgeschalteten Wechselrichter oder eine weitere DC/DC-Stufe auf.

Außerdem weist das Beleuchtungssystem 1 zusätzlich noch einen Steuerbus 11 auf, der vorzugsweise ein nichtdigitales Signal verwendet und vorzugsweise eine AC-Spannung, insbesondere die Netzspannung als physikalischen Träger verwendet, der durch manuelle, vorzugsweise physische (und nicht virtuelle) Betätigung einer Benutzerschnittstelle moduliert wird.

Dieser Steuerbus 11 stellt eine Schnittstelle der einzelnen Betriebsgeräte 2 dar, und verbindet diese so miteinander. An den Steuerbus 11 ist außerdem weiterhin eine Nutzerschnittstelle 3 angeschlossen, beispielsweise ein Drehdimmschalter oder ein Dimmtaster. Denkbar ist jedoch auch ein Bedienterminal mit einer Tasten- oder Touchpad-Eingabe und einer Touchscreen oder einer akustischen Ausgabe. Auch kann der Bus eine zentrale Steuereinheit, beispielsweise in Form des Terminals aufweisen.

Über die Nutzerschnittstelle 3 können so Ansteuerbefehle an die Busschnittstellen 10 der einzelnen Betriebsgeräte übermittelt werden. Dabei ist natürlich denkbar, dass insbesondere bei Einsatz eines DALI-Standards zur Signalübertragung die Ansteuerbefehle an einzelne Betriebsgeräte adressiert werden können. Im einfachsten Fall jedoch, wenn es sich bei der Nutzerschnittstelle lediglich um einen Taster oder Schalter handelt, werden die Ansteuerbefehle automatisch an alle Betriebsgeräte 2 auf gleiche Weise adressiert. Der Bus 11 verwendet weiterhin vorzugsweise ein DSI-Protokoll (Digital Standard Interface).

Bei den Betriebsgeräten 2 handelt es sich vorzugsweise um elektronische Vorschaltgeräte. Diese weisen vorzugsweise einen Controller, d.h. eine integrierte Schaltung, wie beispielsweise einen ASIC 6 auf. Denkbar ist jedoch auch ein Mikrocontroller oder eine Hybridschaltung. Integriert oder zusätzlich kann noch ein Zähler verwendet werden, der insbesondere die Anzahl von Nulldurchgängen zählt.

Weiterhin weist das Betriebsgerät 2 eine Busschnittstelle 10 auf, vorzugsweise eine DSI-Schnittstelle. Darüber hinaus weist das Betriebsgerät eine Einheit zur Nulldurchgangserkennung 8 auf. Diese erkennt den den Zeitpunkt von signifikanten Werten, in erster Linie vom Nulldurchgang, der Versorgungsspannung 4. Denkbar ist jedoch auch, dass sie das Extremum der Versorgungsspannung oder den Wendepunkt erkennt.

Wenn es sich bei dem Leuchtmittel 5 um eine Gasentladungslampe handelt, so kann das Betriebsgerät 2 noch zusätzlich eine Einheit zur Zünderkennung der Lampe 9 aufweisen.

Das Betriebsgerät 2 weist auch eine Einheit 7 auf zur Bestimmung einer vorgegebenen Zeitspanne. Diese vorgegebene Zeitspanne wird dabei in Abhängigkeit von den Werten der Einheiten 8, 9 und der Busschnittstelle 10 mittels einem der oben gezeigten Verfahren bestimmt. Der so bestimmte Wert der vorgegebenen Zeitspanne wird vorzugsweise in einem Speicher abgelegt.

Dabei ist auch denkbar, dass das Betriebsgerät so ausgelegt ist, dass es mehrere der oben gezeigten Verfahren ausführen kann. Notwendige Berechnungen können durch die integrierte Schaltung 6 durchgeführt werden. Die Ansteuerschaltung des Betriebsgeräts 2, die die Stromanpassung der Versorgungsspannung 4 vornimmt und das Leuchtmittel 5 betreibt, kann entsprechend den Werten der Busschnittstelle 10 und der integrierten Schaltung 6 nach Ablauf der vorbestimmten Zeitspanne eingestellt werden.

### Bezugszeichenliste

- 1: Beleuchtungssystem
- 2: Betriebsgerät
- 3: Nutzerschnittstelle
- 4: Spannungsversorgung
- 5: Leuchtmittel
- 6: Integrierte Schaltung
- 7: Einheit zur Bestimmung der vorgegebenen Zeitspanne
- 8: Einheit zur Nulldurchgangserkennung
- 9: Einheit zur Lampenzündungserkennung
- 10: Busschnittstelle des Betriebsgeräts
- 11: Bus

## Patentansprüche

1. Verfahren zur Ansteuerung von Leuchtmitteln, insbesondere Gasentladungslampen oder LEDs,
bei dem wenigstens zwei Betriebsgeräte für Leuchtmittel eine Betriebsmodusänderung, wie bspw. Zünden oder Dimmen, als Antwort auf ein von Aussen an einer Schnittstelle eines jeden Betriebsgeräts eingehendes vorzugsweise durch manuelle Betätigung erzeugtes Signal vornehmen,
**dadurch gekennzeichnet,**
**dass** die Betriebsgeräte die Auslösung der Betriebsmodusänderung synchron mit direkt oder mit indirekt erfassten signifikanten Punkten des Verlaufs der Netzversorgungsspannung als Zeitbasis vornimmt, wobei die signifikanten Punkte durch ein Unterschreiten/Überschreiten vorgegebener Schwellenwerte definiert sind,
wobei ein Ansteuervorgang der Betriebsmodusänderung in jedem Betriebsgerät nach Ablauf einer individuell vorbestimmten Zeitspanne umgesetzt wird, wobei die vorbestimmte Zeitspanne die Zeitdauer vom Zeitpunkt des Empfangs des Signals in jedem Betriebsgerät bis zu einem zweiten Zeitpunkt darstellt, bei dem die Netzversorgungsspannung einen vorbestimmten Nulldurchgang durchläuft.

2. Verfahren nach Anspruch 1,
bei dem als Zeitbasis ein aus der Netzversorgungsspannung gebildetes Rechteck-Taktungssignal verwendet wird.

3. Verfahren nach Anspruch 1 oder 2,
bei dem das von Aussen eingehende Signal die manuelle Betätigung einer lokalen oder entfernten, vorzugsweise manuellen Benutzerschnittstelle wiedergibt.

4. Verfahren nach Anspruch 3,
bei dem die Benutzerschnittstelle ein mit externer Spannung, wie bspw. Netzspannung, oder mit Spannung des Betriebsgeräts versorgter Schalter oder Taster ist,
oder bei dem die Benutzerschnittstelle ein Dimmer, wie bspw. ein Drehdimmer oder ein Mehrfachklick-Dimmer ist..

5. Verfahren nach einem der Ansprüche 1 bis 2,
bei dem das von Aussen eingehende Signal ein analoger oder digitaler Ansteuerbefehl ist.

6. Verfahren nach einem der vorhergehenden Ansprüche,
bei dem das Betriebsgerät eine zeitliche Dauer des von Aussen eingehenden Signals auswertet.

7. Verfahren nach einem der vorhergehenden Ansprüche,
bei dem das Signal impulsartig ist, und der entsprechende Ansteuervorgang impulsartig ausgelöst wird.

8. Verfahren nach einem der Ansprüche 1 bis 6,
bei dem das Signal, beispielsweise ein Dimmbefehl, ein über ein bestimmtes Zeitintervall andauerndes Signal darstellt und der entsprechende Ansteuervorgang über eine Dauer hinweg umgesetzt werden, die durch das bestimmte Zeitintervall vorgegeben wird.

9. Verfahren nach einem der vorherigen Ansprüche,
bei dem der Ansteuervorgang der Betriebsmodusänderung in jedem Betriebsgerät nach Ablauf einer individuell für das Betriebsgerät vorbestimmten Zeitspanne umgesetzt wird.

10. Verfahren nach einem der vorherigem Ansprüche,
bei dem die Leuchtmittel Gasentladungslampen sind und das Signal ein Einschaltbefehl der Gasentladungslampen ist, wobei die Lampenvorheizzeit bis zur tatsächlichen Lampenzündung einer jeden Gasentladungslampe bestimmt wird, und die vorbestimmte Zeitspanne so eingestellt wird, dass Diskrepanzen in der Lampenvorheizzeit der einzelnen Gasentladungslampen kompensiert werden.

11. Verfahren nach Anspruch 1,
bei dem die Leuchtmittel LEDs sind und mit einem PWM-Signal angesteuert werden, wobei die vorbestimmte Zeitspanne für einen Teil der Betriebsgeräte so festgelegt wird, dass sich die durch die einzelnen Betriebsgeräte erzeugten PWM-Pakete zeitlich so überlappen, dass die Zeitdauer, in der keine LED leuchtet, möglichst klein wird.

12. Steuereinheit für ein Betriebsgerät, insbesondere integrierte Schaltung wie bspw. ein ASIC, ein Mikrokontroller oder eine Hybridversion davon, wobei die Steuereinheit zur Durchführung eines Verfahrens nach einem der vorhergehenden Ansprüche ausgebildet ist.

13. Betriebsgerät für Leuchtmittel, insbesondere Gasentladungslampen, LEDs oder OLEDs, aufweisend eine Steuereinheit nach Anspruch 14.

14. Betriebsgerät nach Anspruch 13,
das eine Einheit zu Erkennung signifikanter Punkte der eingangs anliegenden Netzwechselspannung und eine Lampenzündungs-Erkennungseinheit aufweist.

15. Beleuchtungssystem, die wenigstens zwei mit derselben Netzspannung versorgte Betriebsgeräte nach Anspruch 13 oder 14 aufweist.

16. Beleuchtungssystem nach Anspruch 15, die einen Steuerbus aufweist, vorzugsweise einen Digital-Serial-Interface-Bus.

17. Beleuchtungssystem nach Anspruch 15 oder 16,
wobei der Steuerbus für einen DALI-Standard ausgelegt ist.

## Claims

1. A method for controlling lighting means, in particular gas-discharge lamps or LEDs, in which at least two operating devices for lighting means perform a change in the operating mode, such as, for example, igniting or dimming, as a response to an incoming signal preferably generated by manual actuation received from the outside on an interface of each operating device,
**characterized in**
**that** the operating device carries out the triggering of the change in the operating mode synchronously with directly or indirectly detected significant points of the progression of the mains supply voltage as a time basis, wherein the significant points are defined by a falling below/ exceeding specified threshold values,
wherein a control process of the change in the operating mode is implemented in each operating device after expiration of an individually predetermined period of time, wherein the predetermined period of time represents a length of time from the point in time of the receipt of the signal in each operating device until a second point in time, in which the mains supply voltage passes through a predetermined zero crossing.

2. A method according to Claim 1
in which a rectangular pulse signal formed from the mains supply voltage is used as the time basis.

3. A method according to Claim 1 or 2, in which the incoming signal received from the outside reflects a manual actuation of a local or remote, preferably manual user interface.

4. A method according to Claim 3,
in which the user interface is a switch or button provided with external voltage, such as, for example, mains voltage, or with voltage of the operating device,
or in which the user interface is a dimmer, such as, for example, a rotary dimmer or a multiple-click dimmer.

5. A method according to any one of Claims 1 to 2,
in which the incoming signal received from the outside is an analog or digital control command.

6. A method according to any one of the preceding claims,
in which the operating device evaluates a time duration of the incoming signal received from the outside.

7. A method according to any one of the preceding claims,
in which the signal is impulse-like, and the corresponding control process is triggered in an impulse-like manner.

8. A method according to any one of Claims 1 to 6,
in which the signal, for example, a dimming command, represents a signal lasting over a specified time interval and the corresponding control process is implemented over a duration, which is predetermined by the specified time interval.

9. A method according to any one of the preceding claims,
in that the control process of the change in operating mode is implemented in each operating device after expiration of a time period predetermined individually for the operating device.

10. A method according to any one of the preceding claims,
in that the lighting means are gas-discharge lamps and the signal is an actuation command of the gas-discharge lamps, wherein the lamp preheat time is determined up to the actual lamp ignition of each gas-discharge lamp, and the predetermined time period is set such that discrepancies in the lamp preheat time of the individual gas-discharge lamps are compensated.

11. A method according to Claim 1,
in that the lighting means are LEDs and are controlled with a PWM signal, wherein the predetermined time period for a part of the operating device is set such that the PWM packet generated by the individual operating devices overlap in terms of time such that the time duration, in which no LED gives light, is as short as possible.

12. A control unit for an operating device, in particular an integrated circuit such as, for example, an ASIC, a micro-controller or a hybrid version thereof, wherein the control unit is designed for the implementation of a method according to any one of the preceding claims.

13. An operating device for lighting means, in particular gas-discharge lamps, LEDs or OLEDs, having a control unit according to Claim 14.

14. An operating device according to Claim 13,
which has a unit for the detection of significant points of the mains alternating voltage applied at the outset and has a lamp ignition detection unit.

15. A lighting system, which has at least two operating devices supplied with the same mains voltage according to Claim 13 or 14.

16. A lighting system according to claim 15, which has a control bus, preferably a digital-serial interface bus.

17. A lighting system according to Claim 15 or 16,
wherein the control bus is designed for a Digital Addressable Lighting Interface (DALI) standard.

## Revendications

1. Procédé de commande de moyens d'éclairage, plus particulièrement de lampes à décharge de gaz ou de LED, dans lequel au moins deux appareils d'exploitation pour moyens d'éclairage effectuent une modification de mode de fonctionnement, comme un allumage ou une atténuation, en réponse à un signal entrant généré provenant de l'extérieur au niveau d'une interface de chaque appareil d'exploitation, de préférence par actionnement manuel,
**caractérisé en ce que**
mes appareils d'exploitation effectue le déclenchement du changement de mode de fonctionnement de manière synchrone avec des points significatifs, mesurés directement ou indirectement, du tracé de la tension d'alimentation du secteur en tant que base temporelle, les points significatifs étant définis par un passage en dessous / dépassement de valeurs seuils prédéterminées,
un processus de commande du changement de mode de fonctionnement dans chaque appareil d'exploitation étant exécuté après l'écoulement d'un laps de temps prédéterminé de manière individuelle, le laps de temps prédéterminé représentant la durée entre le moment de réception du signal dans chaque appareil d'exploitation et un deuxième moment auquel la tension d'alimentation du secteur effectue un passage à zéro prédéterminé.

2. Procédé selon la revendication 1,
dans lequel, en tant que base temporelle, un signal de cadencement rectangulaire généré à partir de la tension d'alimentation du secteur est utilisé.

3. Procédé selon la revendication 1 ou 2, dans lequel le signal entrant provenant de l'extérieur reproduit l'actionnement manuel d'une interface utilisateur locale ou distante, de préférence manuelle.

4. Procédé selon la revendication 3,
dans lequel l'interface utilisateur est un interrupteur ou un bouton alimenté avec une tension externe, par exemple la tension du secteur, ou avec la tension de l'appareil d'exploitation,
ou dans lequel l'interface utilisateur est un variateur, par exemple un variateur rotatif ou un variateur à clics multiples.

5. Procédé selon l'une des revendications 1 à 2,
dans lequel le signal entrant provenant de l'extérieur est une instruction de commande analogique ou numérique.

6. Procédé selon l'une des revendications précédentes,
dans lequel l'appareil d'exploitation analyse une durée du signal entrant provenant de l'extérieur.

7. Procédé selon l'une des revendications précédentes,
dans lequel le signal présente la forme d'une impulsion et le processus de commande est déclenché sous la forme d'une impulsion.

8. Procédé selon l'une des revendications 1 à 6,
dans lequel le signal, par exemple une instruction de variation, représente un signal durant pendant un intervalle de temps déterminé et le processus de commande correspondant est exécuté sur une durée qui est prédéterminée par l'intervalle de temps déterminé.

9. Procédé selon l'une des revendications précédentes,
dans lequel le processus de commande du changement de mode de fonctionnement est exécuté dans chaque appareil d'exploitation après l'écoulement d'un laps de temps prédéterminé individuellement pour l'appareil d'exploitation.

10. Procédé selon l'une des revendications précédentes,
dans lequel les moyens d'éclairage sont des lampes à décharge de gaz et le signal est une instruction de mise en marche des lampes à décharge de gaz, le temps de préchauffage des lampes jusqu'à l'allumage effectif de chaque lampe à décharge de gaz étant déterminé et le laps de temps prédéterminé étant réglé de façon à ce que les différences de temps de préchauffage entre les différentes lampes à décharge de gaz soient compensées.

11. Procédé selon la revendication 1,
dans lequel les moyens d'éclairage sont des LED et sont pilotés avec un signal PWM, le laps de temps prédéterminé étant déterminé pour une partie des appareils d'exploitation, de façon à ce que les paquets PWM générés par les différents appareils d'exploitation se superposent temporellement de façon à ce que la durée pendant laquelle aucune LED n'est allumée soit la plus courte possible.

12. Unité de commande pour un appareil d'exploitation, plus particulièrement circuit intégré, par exemple un ASIC, un micro-contrôleur ou une version hybride de ceux-ci, l'unité de commande étant conçue pour la réalisation d'un procédé selon l'une des revendications précédentes.

13. Appareil d'exploitation pour moyens d'éclairage, plus particulièrement des lampes à décharge de gaz, des LED ou des OLED, comprenant une unité de commande selon la revendication 14.

14. Appareil d'exploitation selon la revendication 13,
qui comprend une unité pour la détection de points significatifs de la tension alternative du secteur appliquée au début et une unité de détection d'allumage de lampe.

15. Système d'éclairage, qui comprend au moins deux appareils d'exploitation, alimentés avec la même tension de secteur, selon la revendication 13 ou 14.

16. Système d'éclairage selon la revendication 15, qui comprend un bus de commande, de préférence un bus d'interface série numérique.

17. Système d'éclairage selon la revendication 15 ou 16, le bus de commande étant conçu pour un standard DALI.
